# EUROPEAN PATENT APPLICATION

(11) **EP 4 749 034 A1**
(43) Date of publication of application: **27.05.2026**
(21) Application number: 24871976.7
(22) Date of filing: 17.09.2024
(51) Int. Cl.: E02F 9/20, E02F 9/26, H04N 7/18

(54) **WORK MACHINE**

(30) Priority: 27.09.2023 JP 2023166544
(71) Applicant: Hitachi Construction Machinery Co., Ltd., Tokyo 110-0015 (JP)
(72) Inventor: TOKITA, Shigeki, Tsuchiura-shi, Ibaraki 300-0013 (JP); KUROKAMI, Kazushige, Tsuchiura-shi, Ibaraki 300-0013 (JP); SAKAMOTO, Hiroshi, Tsuchiura-shi, Ibaraki 300-0013 (JP); FUJINAMI, Takumi, Tsuchiura-shi, Ibaraki 300-0013 (JP)
(74) Representative: Manitz Finsterwald Patent- und Rechtsanwaltspartnerschaft mbB
(86) International application number: PCT/JP2024/033158
(87) International publication number: WO 2025/070182

(57) **Abstract**

The work machine includes a vehicle body, a camera for capturing the surroundings of the vehicle body, a monitor for displaying the camera image photographed by the camera, a monitor operation device for instructing changes in the display magnification of the camera image displayed on the monitor, and a controller for controlling the display of the monitor in response to the operation of the monitor operation device. The controller notifies the operator of caution or disables the change in display magnification instructed by the monitor operation device when the display magnification instructed by the monitor operation device is outside the predetermined magnification range and predetermined operating conditions are met before the operation of the vehicle body. This suppresses the deficiency of the area displayed on the monitor relative to the proper display target area during operation.

## Description

### Technical Field

The present invention relates to work machines such as hydraulic excavators.

### Background Art

Work machines such as hydraulic excavators may be equipped with a function to provide operators with camera images capturing the surroundings of the work machine. This system that provides camera images of the surroundings is called a visibility assistance system, making it easier for the operator to understand the situation around the machinery while operating it. The monitor displaying camera images in the visibility assistance system is often also used as a display device for menu screens to perform various settings of the work machine. Therefore, after operating the menu screen, the operator needs to switch the monitor display to the camera image before starting the operation of the work machine.

In contrast, there are known work machines that automatically display camera images on the monitor when an operation signal to operate the actuator of the work machine is input, even if the camera image is not displayed on the monitor (Patent Document 1).

### Prior Art Document

### Patent Documents

Patent Document 1: WO 2018/123001

### Summary of the Invention

### Problem to be Solved by the Invention

Here, if the camera image displayed on the monitor of the work machine can be enlarged and reduced, it is convenient for the operator to enlarge the area of interest for detailed confirmation or to display a wide area to quickly check the general situation around the work machine. However, the primary purpose of displaying camera images is to visually provide the operator with information on the current situation around the work machine during operation, and there is a recommended appropriate range for the area displayed in the camera image. For example, if the operator operates the work machine while the camera image is enlarged, there may be a deficiency in the area displayed on the monitor compared to the area that should be displayed, making it impossible for the operator to confirm the current situation around the work machine on the monitor.

The system in Patent Document 1 discloses a function where, if the camera image is not displayed on the monitor, the display on the monitor automatically switches to the camera image according to the operation without manual switching. However, even using this function, for example, if the work machine is operated with the camera image enlarged, the function of switching the display does not work because the camera image is already displayed. Therefore, there may be a deficiency in the area displayed on the monitor compared to the area that should be displayed, which can hinder the confirmation of the current situation around during operation.

The objective of the present invention is to provide a work machine that can suppress the deficiency of the area displayed on the monitor during operation compared to the appropriate display target area.

### Means for Solving the Problem

To achieve the above objective, the work machine of the present invention comprises a vehicle body, a front work implement attached to the vehicle body, a camera capturing the surroundings of the vehicle body, a monitor displaying the camera image captured by the camera, a monitor operation device instructing the change of display magnification of the camera image displayed on the monitor, and a controller controlling the display of the monitor according to the operation of the monitor operation device. The controller notifies the operator of caution or disables the change of display magnification instructed by the monitor operation device if the instructed display magnification is outside the predetermined range and predetermined operation conditions are met before the operation of the vehicle body.

### Advantages of the Invention

According to the present invention, it is possible to suppress the deficiency of the area displayed on the monitor during operation compared to the appropriate display target area.

### Brief Description of the Drawings

[FIG. 1] is a side view showing the appearance of a hydraulic excavator, which is an example of a work machine according to the first embodiment of the present invention.
[FIG. 2] is a schematic view showing the interior of the operating room of the hydraulic excavator in FIG. 1.
[FIG. 3] is a schematic diagram showing the entire control system of the work machine according to the first embodiment of the present invention.
[FIG. 4] is a block diagram schematically showing the functions of the controller of the work machine according to the first embodiment of the present invention.
[FIG. 5A] is an example of the operation of the touch panel of the monitor installed in the work machine according to the first embodiment of the present invention.
[FIG. 5B] is an example of the operation of the touch panel of the monitor installed in the work machine according to the first embodiment of the present invention.
[FIG. 6A] is a diagram showing an example of the display pattern of the camera image displayed on the monitor in the work machine according to the first embodiment of the present invention.
[FIG. 6B] is a diagram showing another example of the display pattern of the camera image displayed on the monitor in the work machine according to the first embodiment of the present invention.
[FIG. 7] is a diagram showing an example of the setting of the setting display area.
[FIG. 8] is a flowchart showing the display control procedure of the monitor by the controller installed in the work machine according to the first embodiment of the present invention.
[FIG. 9A] is an explanatory diagram explaining how the display of the camera image on the monitor is enlarged or reduced according to the zoom operation in the first embodiment of the present invention.
[FIG. 9B] is an explanatory diagram explaining how the display of the camera image on the monitor is enlarged or reduced according to the zoom operation in the first embodiment of the present invention.
[FIG. 9C] is an explanatory diagram explaining how the display of the camera image on the monitor is enlarged or reduced according to the zoom operation in the first embodiment of the present invention.
[FIG. 10A] is an explanatory diagram explaining how it is notified when the camera image on the monitor is narrow or wide relative to the setting display area in the first embodiment of the present invention.
[FIG. 10B] is an explanatory diagram explaining how it is notified when the camera image on the monitor is narrow or wide relative to the setting display area in the first embodiment of the present invention.
[FIG. 10C] is an explanatory diagram explaining how it is notified when the camera image on the monitor is narrow or wide relative to the setting display area in the first embodiment of the present invention.
[FIG. 11] is a block diagram schematically showing the functions of the controller of the work machine according to the second embodiment of the present invention.
[FIG. 12] is a flowchart showing the display control procedure of the monitor by the controller installed in the work machine according to the second embodiment of the present invention.
[FIG. 13] is a block diagram schematically showing the functions of the controller of the work machine according to the third embodiment of the present invention.
[FIG. 14] is a flowchart showing the display control procedure of the monitor by the controller installed in the work machine according to the third embodiment of the present invention.

### Modes for Carrying Out the Invention

Below, the embodiments of the present invention will be described with reference to the drawings.

### (First Embodiment)

### - Work machine -

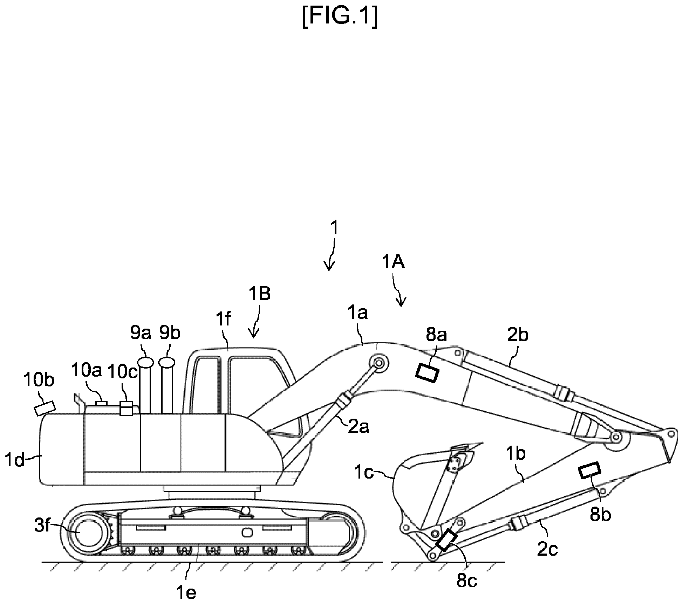

FIG. 1 is a side view showing the appearance of a hydraulic excavator, which is an example of a work machine according to the first embodiment of the present invention. The right side in FIG. 1 is the front of the swing body 1d.

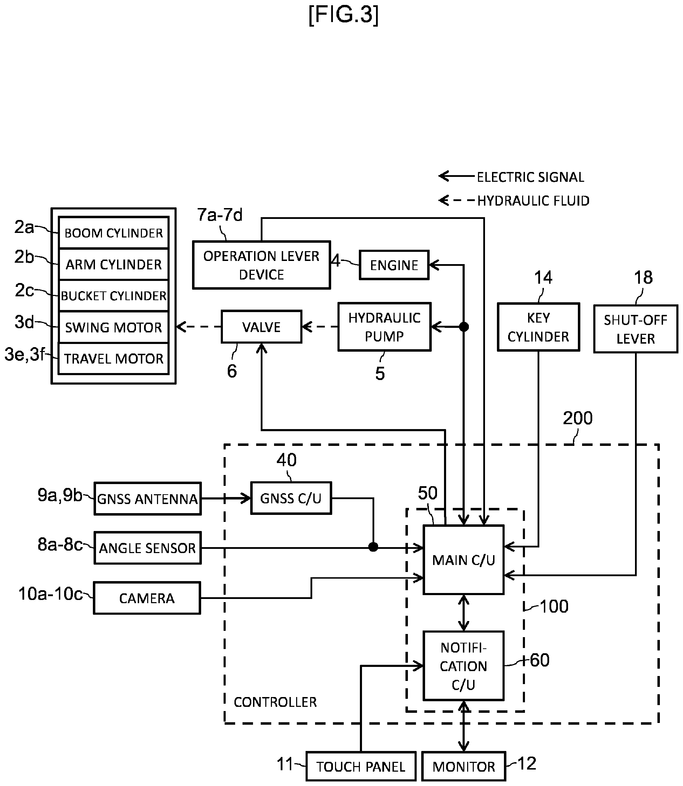

The hydraulic excavator 1 comprises a vehicle body 1B and a multi-joint type front work implement 1A attached to the vehicle body 1B. The front work implement 1A has a boom 1a, an arm 1b, and a bucket 1c, each rotating within a vertical plane. The vehicle body 1B is configured to include a travel body 1e and a swing body 1d mounted rotatably on the travel body 1e. The swing body 1d is equipped with an operating room 1f. The base end of the boom 1a of the front work implement 1A is connected to the front part of the swing body 1d, the arm 1b is connected to the tip of the boom 1a, and the bucket 1c is connected to the tip of the arm 1b. The boom 1a, arm 1b, bucket 1c, swing body 1d, and travel body 1e are each driven by corresponding hydraulic actuators, specifically, a boom cylinder 2a, an arm cylinder 2b, a bucket cylinder 2c, a swing motor 3d (FIG. 3), and left and right travel motors 3e, 3f. The boom 1a, arm 1b, and bucket 1c (strictly speaking, the bucket link) are each equipped with angle sensors 8a, 8b, 8c that detect the rotation angles of the boom 1a, arm 1b, and bucket 1c, respectively. In addition, the swing body 1d is equipped with GNSS antennas 9a, 9b for acquiring the current position of the hydraulic excavator 1, and multiple cameras 10a, 10b, 10c for capturing the surroundings of the vehicle body 1B. Camera 10a captures the left side of the swing body 1d, camera 10b captures the rear, and camera 10c captures the right side.

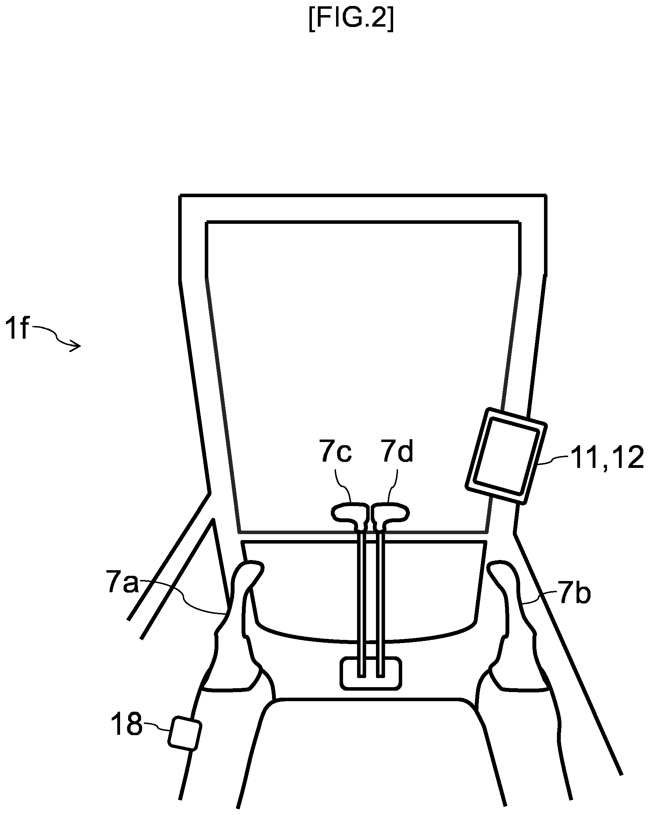

Although not shown in FIG. 1, the swing body 1d is equipped with an engine 4 as a prime mover, a hydraulic pump 5 driven by the engine 4, and a valve 6 that controls the flow of pressure oil from the hydraulic pump 5 to the hydraulic actuators (such as the boom cylinder 2a), as shown in FIG. 3 described later. The valve 6 is controlled according to the operation of the operation lever devices 7a-7d (FIG. 2) installed in the operating room 1f, and the supply direction and flow rate of pressure oil from the hydraulic pump 5 to each hydraulic actuator are controlled, causing each actuator to operate. As a prime mover, an electric motor may be used instead of the engine 4.

### - Operating Room -

FIG. 2 is a schematic diagram showing the interior of the operating room 1f. In the operating room 1f, there are installed operation lever devices 7a-7d for operating the vehicle body or the front work implement, a shut-off lever 18 for restricting the operation of the operation lever devices 7a-7d, and a monitor 12 for displaying camera images captured by cameras 10a-10c. For example, when the operation lever device 7a on the left side of the operator's seat is operated back and forth, the swing body 1d swings left and right, and when operated left and right, the arm 1b rotates back and forth. When the operation lever device 7b on the right side of the operator's seat is operated back and forth, the boom 1a rotates up and down, and when operated left and right, the bucket 1c rotates. Additionally, as a monitor operation device for instructing changes in the display magnification of the camera images displayed on the monitor 12, the monitor 12 in this embodiment is equipped with a touch panel 11.

### - Control System -

FIG. 3 is a schematic diagram representing the entirety of the control system of a work machine according to the first embodiment of the present invention. The swing body 1d of the hydraulic excavator 1 is equipped with a controller 200 that controls the mounted equipment. The controller 200 is configured to include a main C/U50 for controlling actuators, etc., a GNSSC/U40 for processing information acquired by GNSS antennas 9a, 9b, and a notification C/U60 for controlling various notifications to the operator.

Signals from operation lever devices 7a-7d, angle sensors 8a-8c, cameras 10a-10c, key cylinder 14, shut-off lever 18, etc., are input to the main C/U50. The main C/U50 controls the engine 4, hydraulic pump 5, and valve 6 in response to these input signals, and controls hydraulic actuators such as the boom cylinder 2a to drive the hydraulic excavator 1. The key cylinder 14 is an operation device for instructing the start and stop of the engine 4 and is installed in the operating room 1f. The shut-off lever 18 is an operation device that restricts the operation of the operation lever devices 7a-7d as described above. Its configuration includes blocking the pilot pressure that drives the valve 6 to hydraulically restrict the operation of hydraulic actuators by the operation lever devices 7a-7d. Additionally, depending on the position of the shut-off lever 18, the main C/U50 prohibits the output of command signals to the valve 6 (specifically, the solenoid valve controlling the pilot pressure to the valve 6), thereby electrically restricting the operation of hydraulic actuators by the operation lever devices 7a-7d. In any configuration, the position of the shut-off lever 18 is detected by a potentiometer (not shown) or the like and input to the main C/U50.

The notification C/U60 exchanges data with the main C/U50 and has the function of displaying the operating status of the hydraulic excavator 1, menu screens, camera images captured by cameras 10a-10c, etc., on the monitor 12 in response to operations on the touch panel 11.

The notification C/U60, together with the main C/U50, constitutes a display controller 100 that controls the display of the monitor 12 in response to operations on the touch panel 11, serving the role of a visibility assistance system. In this embodiment, a configuration is illustrated in which the functions of the display controller 100 of the controller 200 are shared between the main C/U50 and the notification C/U60, but the functions of the display controller 100 may be provided in a single C/U (Control Unit).

### - Controller -

The controller 200 generates display signals based on signals from the touch panel 11 and cameras 10a-10c, and outputs the generated display signals to the monitor 12 to control the display of the monitor 12. This controller 200 notifies the operator of a warning or disables the change in display magnification indicated by the touch panel 11, which serves as a monitor operation device, when the display magnification of the camera image is outside the predetermined range and the predetermined operating conditions are met before the operation of the vehicle body 1B.

Specifically, the controller 200 has the function of displaying the enlargement or reduction of the camera image on the monitor 12 in response to an operation signal instructing the display magnification of the enlargement or reduction of the camera image input via the touch panel 11. Additionally, the controller 200 has the function of executing a caution notification that the camera image is narrow or wide relative to the setting display area (described later) if the camera image displayed on the monitor 12 is narrow or wide relative to the setting display area. Furthermore, the controller 200 may have the function of disabling the change in display magnification instructed by the touch panel 11 by switching the display area of the camera image displayed on the monitor 12 to the setting display area if the camera image displayed on the monitor 12 is narrow or wide relative to the setting display area. In this embodiment, the controller 200 enlarges or reduces the camera image in response to pinch operations (pinch-out/pinch-in operations) performed on the touch panel 11. Furthermore, in this embodiment, multiple display patterns are provided as options for the camera image. Therefore, the controller 200 selects a display pattern from the options according to the operation signal input from the touch panel 11 and displays the camera image on the monitor 12 in the selected display pattern.

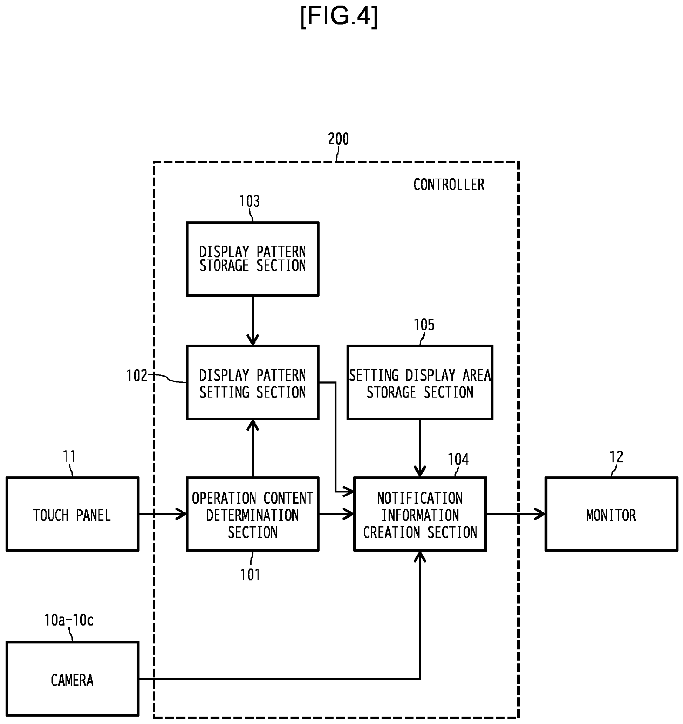

A block diagram schematically representing the functions of the controller 200 is shown in FIG. 4. As shown in FIG. 4, the controller 200 is equipped with an operation content determination section 101, a display pattern setting section 102, a display pattern storage section 103, a notification information creation section 104, and a setting display area storage section 105 to execute the above display control. These may be realized by hardware elements such as circuits or by software elements such as programs. For example, the operation content determination section 101, display pattern setting section 102, and notification information creation section 104 are functions executed by the calculation device (e.g., CPU) of the controller 200. Additionally, the display pattern storage section 103 and setting display area storage section 105 are configured by storage devices (e.g., HDD) provided in or connected to the controller 200. Below, each function will be described.

### [Operation Content Determination section]

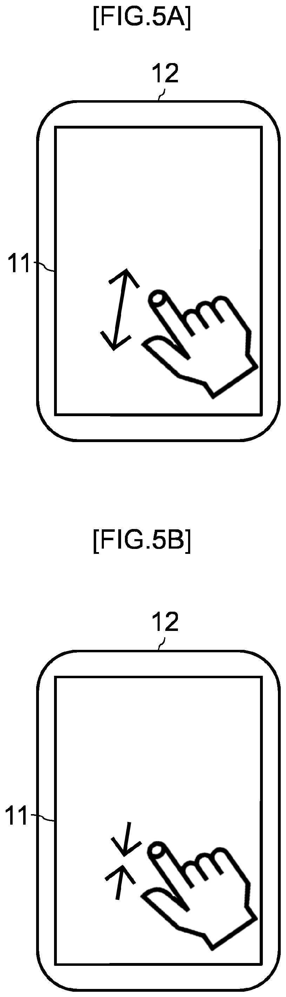

The operation content determination section 101 determines the operation content based on the operation signal input from the touch panel 11. In the operation content determination section 101, the operation content is determined based on the position touched by the operator on the screen of the touch panel 11, the number of fingers touched, the movement of the fingers touched, etc. For example, pinch-out operations (FIG. 5A) and pinch-in operations (FIG. 5B) are recognized by the movement of the distance between two fingers touching the screen expanding or contracting, and the screen display is enlarged or reduced centered on the midpoint of the positions touched by the two fingers.

### [Display Pattern Setting section]

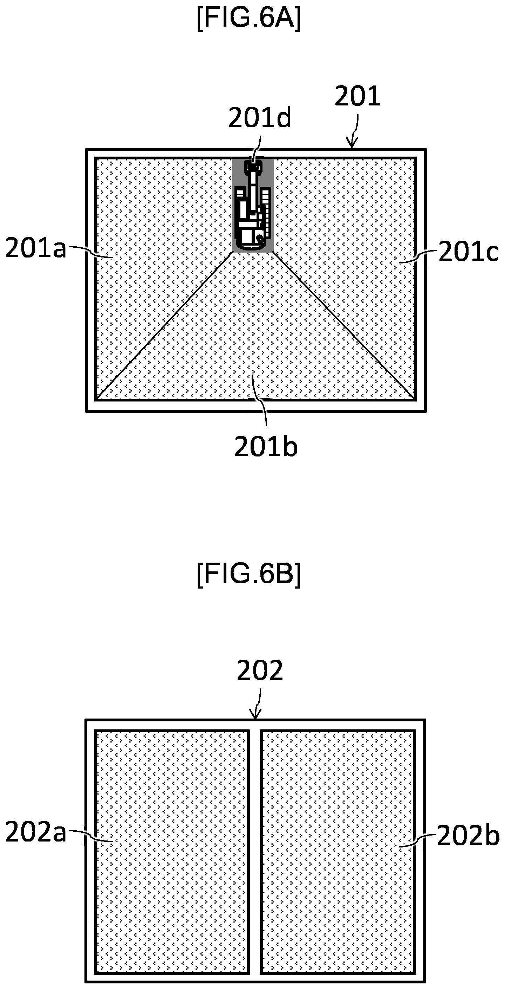

The display pattern setting section 102 sets the display pattern instructed by the touch panel 11 based on the operation content determined by the operation content determination section 101. The display pattern, for example, regarding the display form of the camera image displayed on the monitor 12, is pre-stored in at least one (multiple in this embodiment) in the display pattern storage section 103. The display pattern setting section 102 reads and sets the display pattern corresponding to the operation content determined by the operation content determination section 101 from the display pattern storage section 103. Examples of display patterns of camera images displayed on the monitor 12 are shown in FIG. 6A and FIG. 6B.

The camera image 201 related to the first display pattern illustrated in FIG. 6A is a real-time bird's-eye view of the hydraulic excavator 1 generated by compositing the photographed images of cameras 10a-10c. Specifically, the camera image 201 is a projected display of a bird's-eye view around the hydraulic excavator 1, generated by compositing the photographed images from cameras 10a, 10b, and 10c around the hydraulic excavator icon 201d. In the left area 201a of the hydraulic excavator icon 201d in the camera image 201, the photographed image of camera 10a is converted into a bird's-eye view and displayed. Similarly, in the rear area 201b and right area 201c of the hydraulic excavator icon 201d, the captured images of cameras 10b, 10c are converted into bird's-eye view and displayed, respectively.

The camera image 202 related to the second display pattern illustrated in FIG. 6B is displayed by trimming and arranging the photographed images of cameras 10a and 10b in adjacent areas 202a and 202b, respectively. Different camera images are displayed in areas 202a and 202b, but it is also possible to display different areas of the same camera's photographed image in areas 202a and 202b. FIG. 6B illustrates an example where areas 202a and 202b displaying two camera images are arranged horizontally, but they can also be arranged vertically. Furthermore, the camera images displayed in areas 202a and 202b can be switched arbitrarily, and each area can display a photographed image selected from cameras 10a-10c. Additionally, a screen configuration that displays two camera images side by side can be adopted, or instead of displaying multiple camera images, a configuration that enlarges only one photographed image selected from cameras 10a-10c can be adopted.

### [Setting Display Area Storage section]

In FIG. 4, the setting display area storage section 105 stores a pre-setting display area for the camera images displayed on monitor 12, so that a predetermined area around the vehicle body 1B is displayed on monitor 12. The setting display area is the recommended area of the surrounding region displayed in the camera images on monitor 12 during the operation of the hydraulic excavator 1. The setting display area can be of a specific size or an area defined by upper and lower limits of width. The predetermined area around the vehicle body 1B related to the setting display area is the area where interference with obstacles should be noted. In this embodiment, the rear end of the swing body 1d is a blind spot for the operator in the operating room 1f and is the part that describes the maximum swing path of the swing body 1d, so the area corresponding to the swing radius of the rear end of the swing body 1d is set as the predetermined area. In other words, in this embodiment, the camera images of the setting display area displayed on monitor 12 show the surrounding area beyond the rear end swing radius of the swing body 1d. When multiple display patterns are prepared, the setting display area storage section 105 stores individually set display magnifications for each display pattern so that the setting display area is displayed on monitor 12 for each display pattern.

It should be noted that the area corresponding to the rear end swing radius of the swing body 1d is the narrowest area set as the setting display area, and the setting display area can be set to a wider area than this. However, if the area is excessively wide, obstacles appearing on the screen become smaller and harder to confirm on the monitor 12, so it is necessary to ensure that obstacles displayed on the monitor 12 do not become excessively small. As mentioned above, in this embodiment, if the display magnification of the camera image is outside the predetermined range of magnification and certain operating conditions are met before the operation of the vehicle body 1B, the operator is notified of this, or the change in display magnification is disabled. In this case, an example of a predetermined magnification for displaying camera images is a magnification where the camera image displayed on the monitor 12 is narrower than the aforementioned rear-end turning radius.

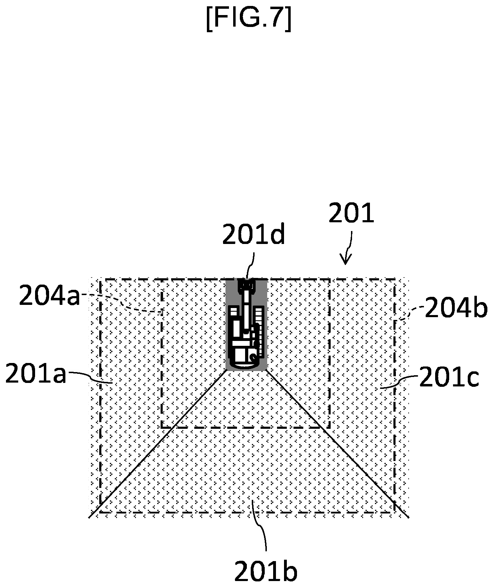

FIG. 7 is a diagram showing an example of the setting of the display area. The smaller area 204a shown by the dotted line in FIG. 7 is an example of the boundary of the predetermined area around the vehicle body that should be shown to the operator through monitor 12 as a visibility assistance system during the operation of the hydraulic excavator 1. In the example of FIG. 1, area 204a is set to cover the maximum swing radius of the hydraulic excavator 1. An example of the size of the setting display area is area 204a. Also, the larger area 204b shown by the dotted line in FIG. 7 is an example of the boundary that defines the limit of the wide area set as the setting display area. When an area larger than this area 204b is displayed, the obstacles displayed in the camera image 201 become excessively small, reducing their visibility. The setting display area should not be set to a wider area than this area 204b. FIG. 7 illustrates the camera image 201, which is a composite bird's-eye view, but the same concept applies to the camera image 202 (FIG. 6B) that displays individual camera images.

### [Notification Information Creation section]

In FIG. 4, based on the operation signal input from the touch panel 11, the notification information creation section 104 generates a display image of the display pattern set by the display pattern setting section 102 using the image data input in real-time from cameras 10a-10c and outputs it to monitor 12. Additionally, based on the operation signal input from the touch panel 11, the notification information creation section 104 appropriately outputs information such as meters necessary for operation, maps, menu screens, etc., to monitor 12. Furthermore, if a pinch operation is determined by the operation content determination section 101, the notification information creation section 104 performs enlargement or reduction of the camera image according to the operation. In the case of other images such as maps, if a pinch operation is performed, the notification information creation section 104 executes the same process.

Additionally, the notification information creation section 104 determines whether the camera image displayed on monitor 12 is narrow or wide relative to the setting display area. Then, if the camera image is narrow or wide relative to the setting display area, the notification information creation section 104 notifies that the camera image is narrow or wide relative to the setting display area. For example, if the operator resumes the operation of the hydraulic excavator 1 after enlarging the camera image to check the surroundings of the vehicle body 1B during an interruption of the hydraulic excavator 1 operation, the operation will start with the setting display area not being displayed if the camera image remains enlarged. In this way, if the camera image display is narrow or wide relative to the setting display area before starting the operation, the notification information creation section 104 generates an image indicating that the camera image is narrow or wide relative to the setting display area and outputs it to monitor 12 to notify the operator of this.

### - Display Control -

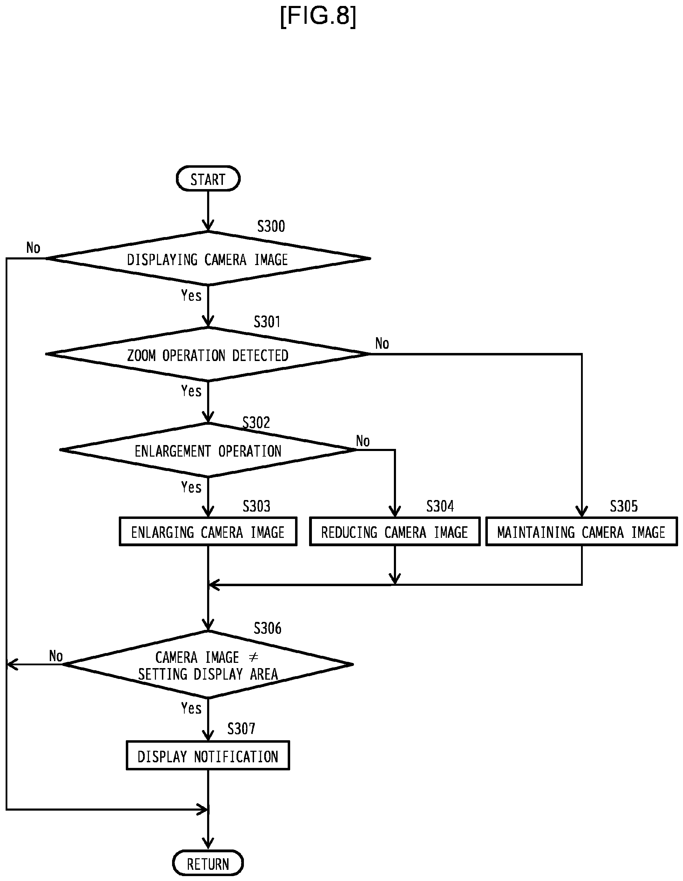

FIG. 8 is a flowchart showing the display control procedure of monitor 12 by controller 200. The controller 200 repeatedly executes the flow of FIG. 8 periodically (for example, at a short cycle of about 0.1s) while powered on.

When the flow of FIG. 8 starts, the controller 200 first determines whether a camera image is currently displayed on monitor 12 (step S300). If the camera image is not displayed on monitor 12, the controller 200 repeats the process of step S300. If the camera image is displayed on the monitor 12, the operation content determination section 101 determines whether an enlargement operation (FIG. 5A) or a reduction operation (FIG. 5B) of the camera image is being performed on the touch panel 11 (Step S301). If an enlargement or reduction operation of the camera image is being performed, the controller 200 determines whether the operation is an enlargement operation by the operation content determination section 101 (step S302).

In step S302, if it is determined that an enlargement operation on the camera image is being performed, the controller 200, through the notification information creation section 104, generates an enlarged image corresponding to the operation and outputs it to the monitor 12, enlarging the display of the camera image on the monitor 12 (step S303) and then moves the procedure to step S306. On the other hand, if it is determined in step S302 that the camera image enlargement operation is not being performed, that is, a reduction operation is being performed, the controller 200 generates a reduced image according to the operation by the notification information creation section 104, outputs it to monitor 12, and moves the procedure to step S306 by reducing the camera image displayed on monitor 12 (step S304). Also, if no operation of enlarging or reducing the camera image is being performed, the controller 200 moves the procedure to step S306 without enlarging or reducing the camera image (step S305).

When moving the procedure to step S306, the controller 200 determines whether the currently displayed camera image on monitor 12 is outside the setting display area stored in the setting display area storage section 105 (whether it is displaying a narrower or wider area than the setting display area), based on the zoom ratio of the camera image currently being output. If the camera image being displayed is narrower or wider than the setting display area, the controller 200 outputs to the monitor 12 that the camera image is narrower or wider than the setting display area, notifying the operator (step S307), and returns the procedure to step S300. If the camera image being displayed matches the setting display area, the controller 200 skips the procedure of step S307 and returns to step S300.

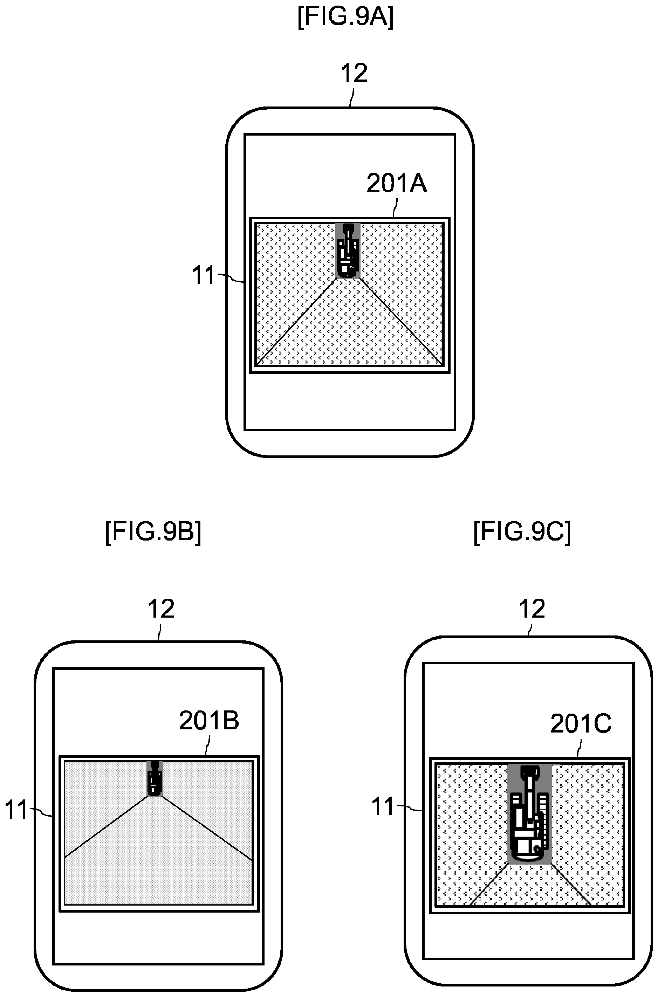

FIGS. 9A-9C are explanatory diagrams illustrating how the display of the camera image on the monitor is enlarged or reduced according to zoom operations. For example, in step S300 of FIG. 8, the camera image 201A shown in FIG. 9A is displayed on the monitor 12. If a reduction operation is performed on this camera image 201A, the camera image 201A is reduced, and a wider camera image 201B than camera image 201A is displayed on the monitor 12, as shown in FIG. 9B. Additionally, if an enlargement operation is performed on camera image 201A, the camera image 201A is enlarged, and a narrower camera image 201C than camera image 201A is displayed on the monitor 12, as shown in FIG. 9C. Camera image 201B displays a reduced composite bird's-eye view using the photographed images from cameras 10a-10c, allowing a wide area to be viewed at a glance, but the display of each photographed image from cameras 10a-10c and the hydraulic excavator icon 201d becomes smaller. Camera image 201C, in contrast to camera image 201B, has a narrower visible range, but the area near the hydraulic excavator 1 appears larger.

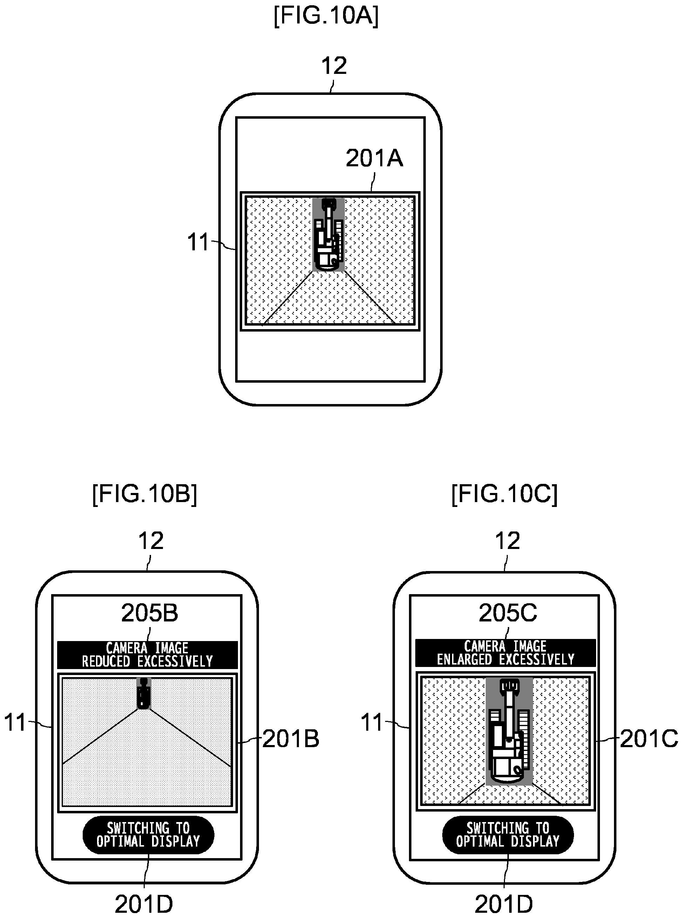

FIG. 10A-10C are explanatory diagrams illustrating how a notification is given when the camera image on the monitor is narrower or wider than the setting display area. The camera image 201A in FIG. 10A shows an example of a display when it is determined to match the setting display area in step S306 of FIG. 8. In contrast, the camera image 201B in FIG. 10B shows an example of a display when it is determined to be a wide-area display relative to the setting display area in step S306 of FIG. 8. In this case, the controller 200 displays a notification 205B on the monitor 12 along with the camera image 201B, informing the operator that the camera image is excessively reduced, as shown in FIG. 10B. Additionally, the camera image 201C in FIG. 10C shows an example of a display when it is determined to be a narrow-area display relative to the setting display area in step S306 of FIG. 8. In this case, the controller 200 displays a notification 205C on the monitor 12 along with the camera image 201C, informing the operator that the camera image is excessively enlarged, as shown in FIG. 10C.

The touch panel 11, as a monitor operation device, is equipped with a button 201D to switch the camera image 201B or 201C displayed on the monitor 12 to the setting display area. Button 201D may be a physical button, but in FIGS. 10B and 10C, it illustrates a button displayed on the monitor 12 along with notification 205B or 205C when the camera image is wider or narrower than the setting display area. When the operator operates button 201D, the controller 200 switches the camera image displayed on the monitor 12 to the display of the setting display area as shown in FIG. 10A. Button 201D may be equipped separately from the touch panel 11 (monitor operation device).

In this embodiment, FIGS. 8 and 10A-10C illustrate a configuration where notification 205B or 205C is displayed when the camera image being displayed on the monitor 12 is narrower or wider than the setting display area. However, instead of displaying notification 205B or 205C, it may be configured to switch the camera image to the display of the setting display area, as in the embodiment described later.

### - Effect -

(1) In this embodiment, the controller 200 notifies the operator if the display magnification instructed by the touch panel 11 is outside the predetermined magnification range and predetermined operating conditions are met before the operation of the vehicle body 1B. The controller 200 informs the operator that the display magnification is outside the predetermined range and prompts switching of the display magnification if predetermined conditions are met before the operation of the vehicle body 1B. This prevents the area displayed on the monitor 12 from being deficient relative to the appropriate display target area during operation.
(2) In this embodiment, the controller 200 has the function of enlarging or reducing the camera image displayed on the monitor 12 relative to the setting display area, according to the operation signal instructing enlargement or reduction of the camera image input via the touch panel 11. As a result, by performing a reduction operation when wanting to check the wide-ranging conditions around the hydraulic excavator 1, and an enlargement operation when wanting to check the detailed state near the hydraulic excavator 1, the operator can adjust the display area of the camera image and change the visible area on the monitor 12 according to the purpose, thereby contributing to improved work efficiency.

However, being able to enlarge and reduce the camera image displayed on the monitor 12 is convenient for enlarging the area of interest for detailed confirmation or for quickly checking the overall situation around the hydraulic excavator 1 with a wide-area display. On the other hand, there may be cases where the area displayed by the camera image is too narrow or too wide during the operation of the hydraulic excavator 1. The primary display purpose of the camera image is to provide the operator with visual information around the hydraulic excavator 1 during operation, and there is a recommended appropriate range for the display target area. For example, if the operator operates the hydraulic excavator 1 while the camera image is enlarged, there may be a deficiency in the area displayed on the monitor 12 relative to the appropriate range that should be presented to the operator, potentially preventing the operator from visually recognizing the current situation around the hydraulic excavator 1. Conversely, if the display area of the camera image is wider than the appropriate range, the display of obstacles or other items that should be notified to the operator may become too small and be overlooked.

In contrast, the controller 200 stores the setting display area as the display area of the appropriate range displayed on the monitor 12 during operation. Therefore, when the camera image displayed on monitor 12 is in a narrow or wide area relative to the setting display area, the controller 200 has a function to notify, via notification 205B or similar, that the camera image is in a narrow or wide area relative to the setting display area. As a result, if the camera image displayed on the monitor 12 is either too reduced or too enlarged, the operator can be informed of this, prompting them to switch the display area of the camera image on the monitor 12 to the setting display area.

As described above, according to this embodiment, the camera image displayed on the monitor 12 can be enlarged and reduced, preventing the area displayed on the monitor 12 from being deficient relative to the appropriate display target area during operation. For example, the operator can quickly check various situations by enlarging or reducing the camera image on the monitor 12 by interrupting the operation of the hydraulic excavator 1. Furthermore, if the operator intends to operate the hydraulic excavator 1 as is, it can be notified that the camera image is enlarged or reduced relative to the setting display area, allowing the display of the camera image to be switched to the setting display area before starting operation.

(3) Since the setting display area is configured to display the area corresponding to the swing radius of the swing body 1d, obstacles that may interfere with the vehicle body 1B when it turns can be displayed on the monitor 12, allowing reasonable suppression of interference between the vehicle body 1B and obstacles.

(4) In this embodiment, a plurality of display patterns for the camera images are prepared, and the display pattern can be switched arbitrarily. Therefore, in the plurality of display patterns, the display magnification is individually set for each display pattern so that each setting display area is displayed on the monitor 12, ensuring that the setting display area is displayed on the monitor 12 regardless of the display pattern. Thus, it is possible to prevent obstacles that the operator should be aware of while driving from not appearing in the camera image due to the selected display pattern, or making it difficult for the operator to confirm the obstacles that need to be recognized.

(5) The plurality of display patterns include a bird's-eye view of the hydraulic excavator 1 generated by composing images photographed by a plurality of cameras 10a-10c. By displaying the setting display area in this bird's-eye view, the operator can easily grasp the positional relationship between the obstacles and the hydraulic excavator 1.

(6) Additionally, a touch panel 11 is adopted as a monitor operation device for operating the monitor 12. Therefore, the operator can perform pinch operations on the touch panel 11, allowing for intuitive and easy enlargement or reduction of the camera images.

(7) Furthermore, for example, when reducing the camera image by performing a pinch-out operation according to notification 205C indicating that the camera image is overly enlarged, it may be reduced beyond the setting display area. In such cases, notification 205B may be displayed, and it may be difficult to dismiss the notification. Therefore, in this embodiment, a button 201D is equipped to switch the camera image displayed on the monitor 12 to the setting display area. This allows for the quick switching of the camera image display area to the setting display area with a single touch, thereby dismissing the notification.

### (Second Embodiment)

The second embodiment of the present invention will be described. The difference between this embodiment and the first embodiment is that the controller 200 stores determination conditions for determining whether the hydraulic excavator 1 is in operation or preparation for operation, and when the determination conditions are met, it determines that predetermined operating conditions have been established before the operation of the vehicle body 1B. When the predetermined operating conditions are established, it is assumed that the hydraulic excavator 1 is in operation or preparation for operation. If it is determined that the predetermined operating conditions are established, the controller 200 notifies when the camera image on the monitor 12 is narrower or wider than the setting display area. In other words, in the first embodiment, if the camera image on the monitor 12 is narrower or wider than the setting display area, the operator is notified accordingly. In contrast, in this embodiment, notification is not given merely because the camera image is narrower or wider than the setting display area; notification is given when operation or preparation for operation is detected and the camera image is narrower or wider than the setting display area. In this embodiment, the condition for determining whether the hydraulic excavator 1 is in operation or preparation for operation is that the non-operation state of the touch panel 11 continues beyond a preset setting time α[s]. The setting time α can be exemplified by a time of several seconds to a dozen seconds.

### - Controller -

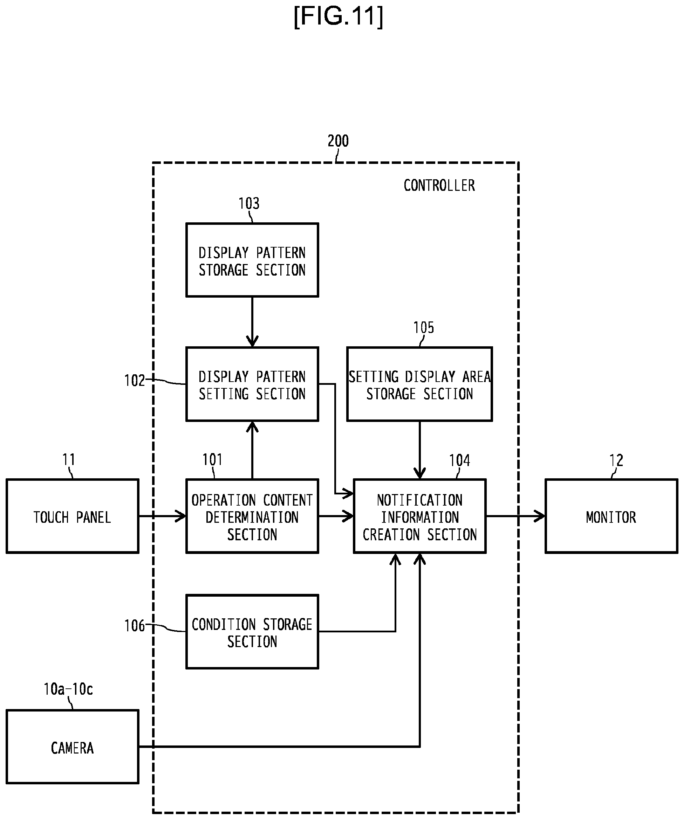

FIG. 11 is a block diagram schematically illustrating the functions of a controller for a work machine according to the second embodiment of the present invention. FIG. 11 corresponds to FIG. 4 of the first embodiment, and elements similar to or corresponding to those in the first embodiment are denoted by the same reference numerals as in FIG. 4, with explanations omitted as appropriate.

As shown in FIG. 11, the controller 200 includes an operation content determination section 101, a display pattern setting section 102, a display pattern storage section 103, a notification information creation section 104, a setting display area storage section 105, and a condition storage section 106 to execute the above display control. The condition storage section 106 is composed of a storage device (e.g., HDD) equipped in or connected to the controller 200.

The condition storage section 106 stores a preset setting time α as a threshold for determining the above determination conditions during the non-operation continuation time Tm[s] when the non-operation state of the touch panel 11 continues. In this embodiment, the notification information creation section 104 executes a determination of whether the camera image displayed on the monitor 12 is narrower or wider than the setting display area, in addition to determining whether the non-operation continuation time Tm of the touch panel 11 exceeds the setting time α (Tm>α). If both determinations are satisfied, notification 205B or 205C is output to the monitor 12. If one or both determinations are not satisfied, the notification information creation section 104 does not output notification 205B or 205C to the monitor 12. Therefore, in this embodiment, even if the camera image displayed on the monitor 12 is narrower or wider than the setting display area, notification 205B or 205C is not displayed if the non-operation continuation time Tm of the touch panel 11 is equal to or less than the setting time α.

### - Display Control -

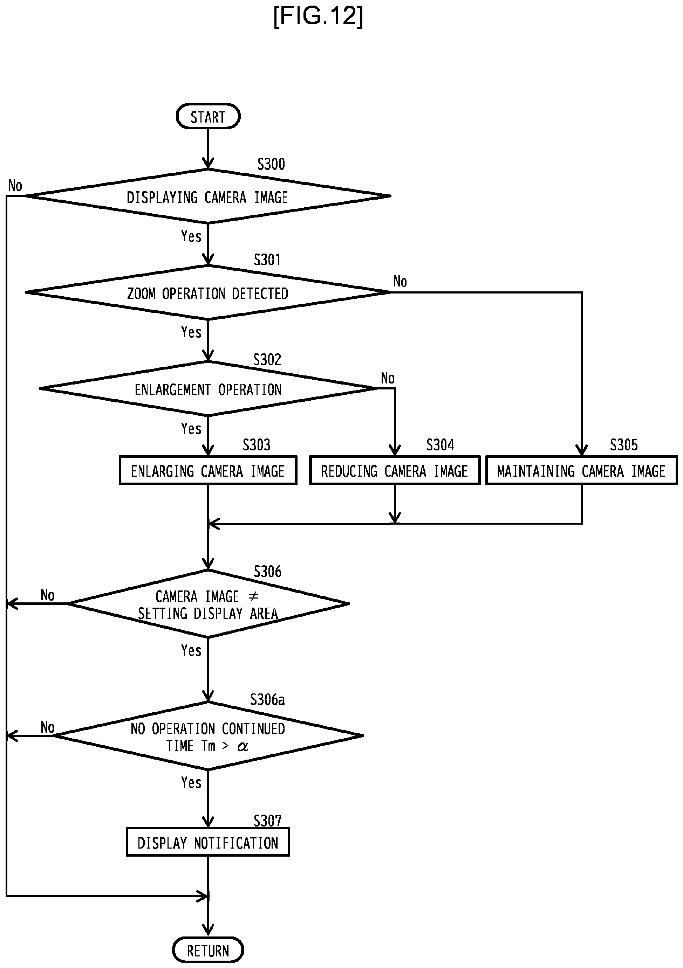

FIG. 12 is a flowchart illustrating the display control procedure of the monitor by the controller equipped in the work machine according to the second embodiment of the present invention. FIG. 12 corresponds to FIG. 8 of the first embodiment, and processes similar to or corresponding to those in the first embodiment are denoted by the same numbers as in FIG. 8, with explanations omitted as appropriate. The controller 200 periodically executes the flow of FIG. 12 (e.g., at a short cycle of about 0.1s) while powered on.

When the flow of FIG. 12 starts, the controller 200 executes steps S300-S306 as in the first embodiment, enlarges or reduces the camera image displayed on the monitor 12 when enlargement or reduction operations are performed on the touch panel 11, and determines whether the camera image is wider or narrower than the setting display area. In this embodiment, if it is determined that the camera image is wider or narrower than the setting display area, the controller 200 moves the procedure from step S306 to step S306a before moving the procedure to step S307, and determines whether the current non-operation continuation time Tm of the touch panel 11 exceeds the setting time α (Tm>α). If the non-operation continuation time Tm continues to exceed the setting time α, the controller 200 outputs to the monitor 12 that the camera image being displayed is narrower or wider than the setting display area, notifying the operator (step S307), and returns the procedure to step S300. If the non-operation continuation time Tm is equal to or less than the setting time α, the controller 200 skips the procedure of step S307 and returns to step S300. Note that the processing of steps S306 and S306a may be executed in reverse order or in parallel.

Regarding other configurations and functions, the work machine of this embodiment is similar to the work machine of the first embodiment. In this embodiment, instead of displaying notification 205B or 205C, the configuration may switch the camera image display area to the setting display area.

### -Effect-

According to this embodiment, the condition that the non-operation continuation time Tm of the touch panel 11 exceeds the setting time α has been added to the conditions for displaying notifications 205B and 205C. As a result, for example, when the operator is operating the monitor 12, notifications 205B and 205C are not displayed because the non-operation continuation time Tm is equal to or less than the setting time α. If notifications 205B and 205C are displayed every time the camera image is enlarged or reduced during the operation of the monitor 12, it may cause annoyance to the operator. Therefore, in this embodiment, notifications 205B and 205C are not displayed during the operation of the monitor 12, reducing the operator's annoyance. Then, when the operator finishes operating the touch panel 11 and starts operating the hydraulic excavator 1, the non-operation continuation time Tm exceeds the setting time α. If the camera image is excessively enlarged or reduced at this time, notifications 205B and 205C are displayed on the monitor 12, achieving the same effect as in the first embodiment.

### (Third Embodiment)

The third embodiment of the present invention will be described. The difference between this embodiment and the first embodiment is that, like the second embodiment, the controller 200 stores determination conditions for determining whether the hydraulic excavator 1 is in operation or preparation for operation, and determines that predetermined operating conditions are met before the operation of the vehicle body 1B when the determination conditions are satisfied. When the predetermined operating conditions are met, it is assumed that the hydraulic excavator 1 is in operation or preparation for operation. However, in this embodiment, when it is determined that the predetermined operating conditions are met, the controller 200 switches the display area of the camera image to the setting display area when the camera image on the monitor 12 is narrower or wider than the setting display area. In other words, in the first embodiment, if the camera image on the monitor 12 is narrower or wider than the setting display area, this is configured to be notified to the operator. In contrast, in this embodiment, a notification is not given merely because the camera image is narrower or wider than the setting display area; instead, when operation or preparation for operation is detected, the display of the camera image is switched to the setting display area. In this embodiment, the release of the operation restriction of the operation lever devices 7a-7d by the shut-off lever 18 is used as a condition for determining whether the hydraulic excavator 1 is in operation or preparation for operation.

### - Controller -

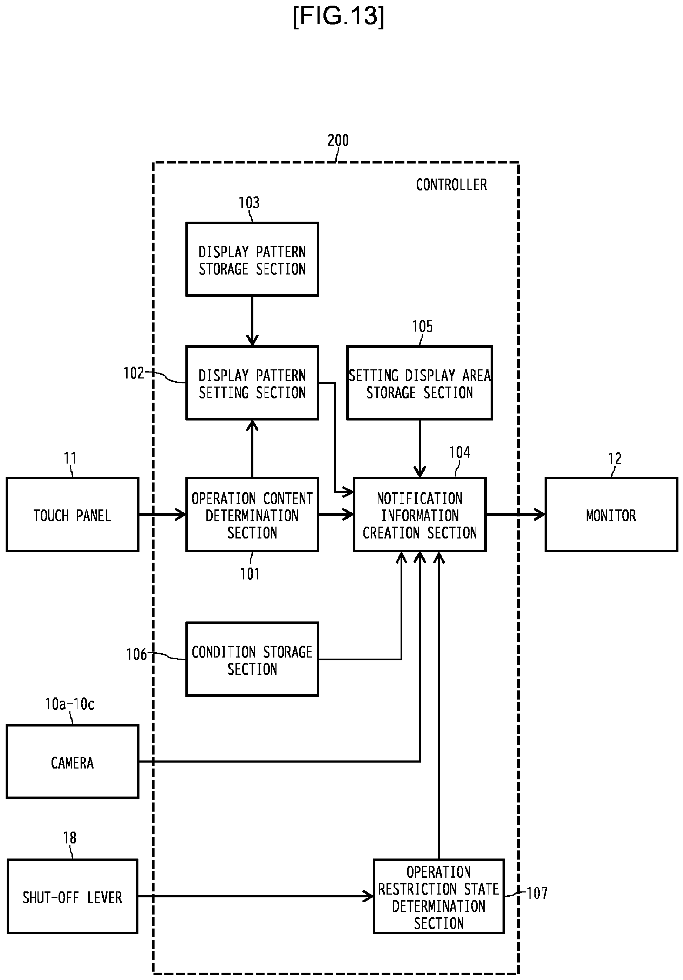

FIG. 13 is a block diagram schematically illustrating the functions of a controller for a work machine according to the third embodiment of the present invention. FIG. 13 corresponds to FIG. 4 of the first embodiment and FIG. 11 of the second embodiment, and elements similar to or corresponding to those in the first or second embodiment are denoted by the same reference numerals as in FIG. 4 or FIG. 11, and explanations are omitted as appropriate.

As shown in FIG. 13, the controller 200 includes an operation content determination section 101, a display pattern setting section 102, a display pattern storage section 103, a notification information creation section 104, a setting display area storage section 105, and a condition storage section 106, in addition to an operation restriction state determination section 107, to execute the above display control. The operation restriction state determination section 107 is a function executed by the calculation device (e.g., CPU) of the controller 200.

In this embodiment, the condition storage section 106 stores the determination condition of whether the operation restriction of the operation lever devices 7a-7d by the shut-off lever 18 is released. Furthermore, the operation restriction state determination section 107 determines, for example, based on the output of the potentiometer of the shut-off lever 18, whether the position of the shut-off lever 18 is a restriction position that restricts (disables) the operation of the operation lever devices 7a-7d or a release position that allows the operation of the operation lever devices 7a-7d. In this embodiment, the notification information creation section 104 executes a determination of whether the camera image displayed on the monitor 12 is narrower or wider than the setting display area, in addition to determining whether the operation restriction of the operation lever devices 7a-7d by the shut-off lever 18 is released, i.e., whether the shut-off lever 18 is in the release position. Then, when both determinations are satisfied, the display area of the camera image is switched to the setting display area. If one or both determinations are not satisfied, the notification information creation section 104 maintains the current display state without switching the display area of the camera image to the setting display area.

### - Display Control -

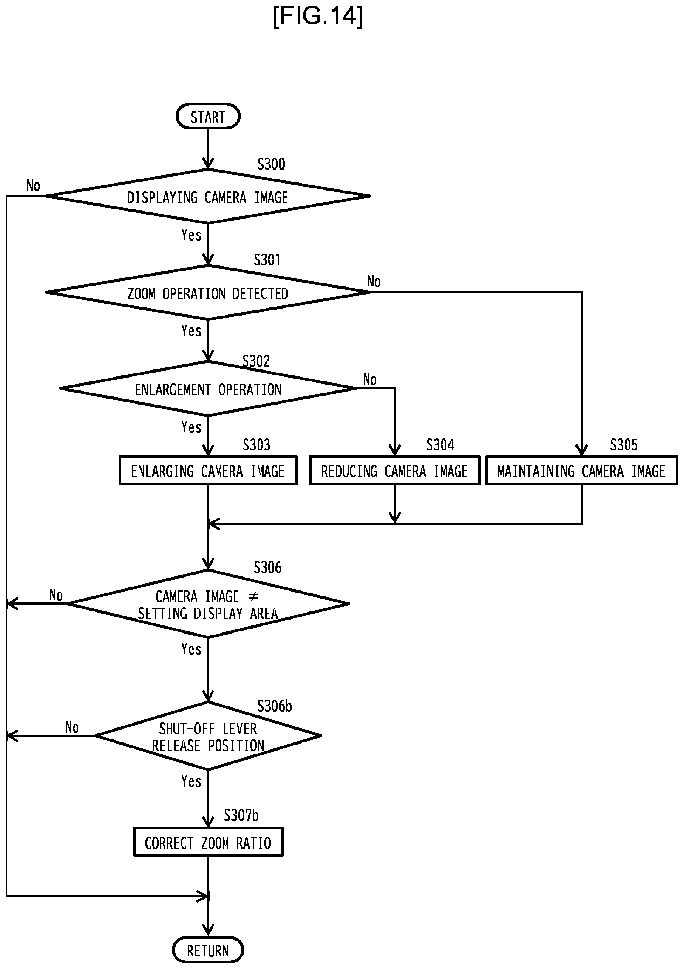

FIG. 14 is a flowchart illustrating the display control procedure of the monitor by the controller installed in the work machine according to the third embodiment of the present invention. FIG. 14 corresponds to FIG. 8 of the first embodiment and FIG. 12 of the second embodiment, and processes similar to or corresponding to those in the first or second embodiment are denoted by the same numbers as in FIG. 8 or FIG. 12, and explanations are omitted as appropriate. The controller 200 periodically executes the flow of FIG. 14 (e.g., at a short cycle of about 0.1s) while powered on.

When the flow of FIG. 14 starts, the controller 200 executes steps S300-S306 as in the first embodiment, and when the enlargement or reduction operation is performed on the touch panel 11, the camera image displayed on the monitor 12 is enlarged or reduced, and it is determined whether the camera image is wider or narrower than the setting display area. In this embodiment, when it is determined that the camera image is wider or narrower than the setting display area, the controller 200 moves the procedure from step S306 to step S306b and determines whether the position of the shut-off lever 18 is in the release position. If the position of the shut-off lever 18 is in the release position, the controller 200 corrects the zoom ratio of the camera image being displayed and switches the display area to the setting display area (step S307b), then returns the procedure to step S300. If the position of the shut-off lever 18 is in the restriction position, the controller 200 skips the procedure of step S307b and returns to step S300. The processing of steps S306 and S306b may be executed in reverse order or in parallel.

For example, when a wide-area camera image 201B is displayed as shown in FIG. 10B, it is determined in step S306 that the setting display area is not properly displayed. Furthermore, if it is determined in step S306b that the position of the shut-off lever 18 is in the release position, it is considered that the hydraulic excavator 1 is in operation or preparation for operation, and the wide-area camera image 201B is switched to the camera image 201A of the setting display area (FIG. 10A) in step S306b.

### - Effect -

According to this embodiment, the position of the shut-off lever 18 being in the release position is added as a condition for switching the display area of the camera image to the setting display area. As a result, for example, when the operator restricts the operation of the operation lever devices 7a-7d with the shut-off lever 18 to take a break, the camera image does not automatically switch to the setting display area. Therefore, when starting (resuming) the operation of the hydraulic excavator 1, the operator can quickly check the surroundings or vicinity of the hydraulic excavator 1 by enlarging or reducing the camera image before starting the operation. Subsequently, when operating the hydraulic excavator 1, the display of the camera image automatically switches to the setting display area when the position of the shut-off lever 18 is switched to the release position. Therefore, it is possible to prevent the operation of the hydraulic excavator 1 from being performed when the setting display area is not properly displayed. In addition, when starting the operation of the hydraulic excavator 1, the operator does not need to manually adjust the display area of the camera image to the setting display area each time, which can also be expected to improve work efficiency.

In this embodiment, the display area of the camera image is switched to the setting display area (step S307b) when the determination of the display area of the camera image (step S306) and the determination of the position of the shut-off lever 18 (step S306b) are satisfied, but it is also possible to display notifications 205B or 205C as in the first or second embodiment.

### (Modification Example)

The present invention is not limited to the above embodiments and may include various modifications. For example, the present invention is not necessarily limited to configurations that include all the configurations described in each of the above embodiments. For example, it is possible to replace part of the configuration with another configuration. It is also possible to delete part of the configuration of the embodiment or add other configurations.

For example, as a monitor operation device for operating the monitor 12, the above embodiment described an example adopting a touch panel 11, but the monitor operation device may be an operation device using physical buttons, dials, switches, etc. Additionally, when the operation lever devices 7a-7d are operated, if the camera image is enlarged or reduced relative to the setting display area, it can be configured to notify that fact or switch the display area of the camera image to the setting display area. Furthermore, although the example of a hydraulic excavator 1 equipped with the plurality of cameras 10a-10c was described, the present invention is also applicable to a hydraulic excavator 1 equipped with only one camera. Moreover, although the hydraulic excavator 1 was used as an example of a construction machine to which the invention is applied, the present invention is also applicable to other construction machines such as wheel loaders.

### Description of Reference Characters

1: Hydraulic excavator (work machine), 1A: Front work implement, 1B: Vehicle body, 1d: Swing body, 1e: Travel body, 7a-7d: Operation lever device, 10a-10c: Camera, 11: Touch panel (monitor operation device), 12: Monitor, 18: Shut-off lever, 200: Controller, 201: Camera image (bird's-eye view), 201A-C: Camera image, 201D: Button, 202: Camera image, Tm: Non-operation continuation time, α: Setting time

## Claims

1. A work machine comprising:
a vehicle body;
a camera for photographing the surroundings of the vehicle body;
a monitor for displaying camera images taken by the camera;
a monitor operation device for instructing changes in the display magnification of the camera images displayed on the monitor; and
a controller for controlling the display of the monitor in response to the operation of the monitor operation device,
wherein the controller is configured to notify the operator of a warning or disable the change in display magnification indicated by the monitor operation device in case that the indicated display magnification is outside the predetermined range and the predetermined operating conditions are met before the operation of the vehicle body.

2. The work machine according to Claim 1,
wherein the controller is configured to:
store a setting display area for the camera image so that a predetermined area around the vehicle body is displayed on the monitor;
make the camera image to be displayed on the monitor enlarged or reduced and displayed on the monitor in response to an operation signal indicating the magnification or reduction of the camera image input via the monitor operation device; and
execute the notification indicating that the camera images are narrow or wide in relation to the setting display area, in case that the camera images displayed on the monitor are narrower or wider in relation to the setting display area.

3. The work machine according to Claim 1,
wherein the controller is configured to:
store a setting display area for the camera image so that a predetermined area around the vehicle body is displayed on the monitor;
make the camera image to be displayed on the monitor enlarged or reduced and displayed on the monitor in response to an operation signal indicating the magnification or reduction of the camera image input via the monitor operation device; and
disable of change in display magnification instructed by the monitor operation device by switching the display area of the camera images displayed on the monitor to the setting display area, in case that the camera images displayed on the monitor are narrower or wider in relation to the setting display area.

4. The work machine according to Claim 1,
wherein the controller is configured to store the determination conditions for determining whether the operation or preparation operation is being performed, and when the determination conditions are met, determine that the predetermined operating conditions have been met before the operation of the vehicle body.

5. The work machine according to Claim 4,
wherein the determination condition is that the non-operation state of the monitor operation device continues beyond a setting time.

6. The work machine according to Claim 4, further comprising:
a operation lever device for operating the vehicle body or front work implement; and
a shut-off lever for restricting the operation of the operation lever device, and
wherein the determination condition is that the restriction on the operation of the operation lever device by the shut-off lever is released.

7. The work machine according to Claim 2 or 3,
the vehicle body includes a travel body and a swing body mounted to be able to swing on the travel body,
wherein the setting display area is set so that a region corresponding to the swing radius of the swing body is displayed as the predetermined area.

8. The work machine according to Claim 2,
the vehicle body includes a travel body and a swing body mounted to be able to swing on the travel body,
wherein the setting display area is set so that a region corresponding to the swing radius of the swing body is displayed as the predetermined area, and
the predetermined magnification is a display magnification where the camera images displayed on the monitor are narrower than the swing radius.

9. The work machine according to Claim 1,
wherein the controller stores a plurality of display patterns of the camera image and stores the display magnification individually set for each display pattern so that the setting display area is displayed on the monitor for each of the plurality of display patterns.

10. The work machine according to Claim 9,
further comprising a plurality of cameras, and
wherein the display pattern includes a bird's-eye view of the vehicle body, which is generated by combining the photographed images from the plurality of cameras.

11. The work machine according to Claim 1,
the monitor operation device is a touch panel mounted on the monitor, and
wherein the controller enlarges or reduces the camera images in response to pinch operations performed on the touch panel.

12. The work machine according to Claim 1,
further comprising a button for switching the camera images displayed on the monitor to the setting display area.
